# EUROPÄISCHE PATENTSCHRIFT

(11) **EP 3 721 196 B1**
(45) Veröffentlichungstag und Bekanntmachung des Hinweises auf die Patenterteilung: **02.02.2022**
(21) Anmeldenummer: 18815658.2
(22) Anmeldetag: 06.12.2018
(51) Int. Cl.: G01M 3/32

(54) **VERFAHREN ZUR LECKPRÜFUNG MIT EINER FOLIENKAMMER MIT BELÜFTETEM MESSVOLUMEN**
METHOD FOR LEAK TESTING WITH A FOIL CHAMBER WITH VENTED MEASUREMENT VOLUME
PROCÉDÉ DE CONTRÔLE DE FUITE AU MOYEN D'UNE CHAMBRE À PAROIS SOUPLES PRÉSENTANT UN VOLUME DE MESURE MIS À L'AIR LIBRE

(30) Priorität: 08.12.2017 DE 102017222308
(43) Veröffentlichungstag der Anmeldung: 14.10.2020
(73) Patentinhaber: Inficon GmbH, 50968 Köln (DE)
(72) Erfinder: ROLFF, Norbert, 50169 Kerpen-Horrem (DE); DECKER, Silvio, 50999 Köln (DE)
(74) Vertreter: dompatent von Kreisler Selting Werner - Partnerschaft von Patent- und Rechtsanwälten mbB
(86) Internationale Anmeldenummer: PCT/EP2018/083849
(87) Internationale Veröffentlichungsnummer: WO 2019/110749

(56) Entgegenhaltungen:
- DE-A1-102014 218 399

## Beschreibung

Die Erfindung betrifft ein Verfahren zum Prüfen eines Prüflings auf das Vorhandensein eines Lecks unter Verwendung einer Folienkammer.

Die Folienkammer ist eine Prüfkammer mit mindestens einem flexiblen Wandbereich, der zum Beispiel aus einer Folie besteht. Eine typische Folienkammer weist zwei Folienlagen auf, die um den Prüfling herum gegeneinander gelegt werden, um den Prüfling vollständig zu umschließen. Die Folienkammer wird nach Aufnahme des Prüflings hermetisch verschlossen und evakuiert. Anschließend wird die Druckänderung in dem Folienkammervolumenbereich außerhalb des Prüflings überwacht, wobei ein Druckanstieg als Hinweis auf ein Leck in dem Prüfling angesehen wird. Alternativ zur Überwachung des Drucks im Folienkammervolumen kann auch der flexible Wandbereich überwacht werden, wobei eine Veränderung des flexiblen Wandbereichs oder der Folie auf ein Leck hindeuten kann. Ein derartiges Verfahren ist bekannt aus DE 10 2012 200 063 A1.

In DE 10 2014 218 399 A1 wird zur Grobleckprüfung an einem Prüfling eine Folienkammer beschrieben, die ein an den flexiblen Wandbereich angrenzendes Messvolumen auf der im Folienkammervolumen gegenüberliegenden Seite des flexiblen Wandbereichs aufweist. Das Messvolumen ist hermetisch von dem Folienkammervolumen getrennt ausgebildet. In einem Ausführungsbeispiel, bei dem die Folienkammer zwei flexible Wandbereiche in Form jeweils einer Folie aufweist, grenzt an jede der beiden Folien ein Messvolumen an. Bei dem beschriebenen Verfahren wird die den Prüfling enthaltende und geschlossene Folienkammer evakuiert, wobei bereits während des Evakuierens der Folienkammer das Messvolumen überwacht wird, um anhand des Ergebnisses der Überwachung eine Aussage über die Größe eines möglichen Lecks in dem Prüfling zu treffen. Das Überwachen des Messvolumens kann durch das Messen des Drucks in dem Messvolumen oder durch Messen des Gasflusses in der Folienkammer oder aus der Folienkammer heraus erfolgen.

Wenn ein Prüfling, der ein Grobleck aufweist, auf diese Weise untersucht wird, wird beim Evakuieren der Folienkammer auch der Prüfling zumindest zu einem Teil mit evakuiert. Aufgrund des flexiblen Wandbereichs zwischen dem Folienkammervolumen und dem Messvolumen vergrößert sich dann das Messvolumen. Die Vergrößerung des Messvolumens ist dabei größer als im Falle eines dichten Prüflings oder im Falle eines Prüflings, der ein kleineres Leck aufweist. Im Falle eines dichten Prüflings wird lediglich das Folienkammervolumen im Bereich außerhalb des Prüflings evakuiert. Im Falle eines Prüflings mit einem Grobleck wird zudem auch der Prüfling oder zumindest ein Teil des Prüflingsvolumens evakuiert, sodass ein größeres Volumen evakuiert wird als im Falle eines dichten Prüflings. Dadurch ist die Volumenausdehnung des Messvolumens umso größer, je größer das Leck in einem Prüfling ist. Anhand der Ausdehnung des Messvolumens und/oder des flexiblen Wandbereichs kann dann eine Aussage über die Größe eines möglichen Lecks in dem Prüfling getroffen werden.

Der Erfindung liegt die Aufgabe zugrunde, eine insbesondere für große Prüflinge verbesserte Grobleckerkennung an einem Prüfling zu ermöglichen.

Das erfindungsgemäße Verfahren ist definiert durch die Merkmale von Patentanspruch 1.

Demnach ist in einem Gasweg, der das Messvolumen mit der die Folienkammer umgebenden Atmosphäre verbindet, ein steuerbares Belüftungsventil vorgesehen, welches beim Schließen der Folienkammer geschlossen ist, wenn der Druck innerhalb des Messvolumens unterhalb eines Schwellenwertes liegt. Sobald der Druck in dem Messvolumen beim Schließen der Folienkammer den Schwellenwert übersteigt, wird das Belüftungsventil geöffnet. Bei einem kleinen Prüfling wird der Schwellenwert des Drucks in dem Messvolumen beim Schließen der Folienkammer nicht überschritten und das Belüftungsventil bleibt geschlossen. Bei einem großen Prüfling, der einen entsprechend größeren Anteil des Messvolumens beim Schließen der Folienkammer verdrängt, wird der vorgegebene Schwellenwert des Drucks in dem Messvolumen überschritten und das Ventil geöffnet, sodass überschüssiges Gas aus dem Messvolumen entweichen kann und sich in Folge dessen der flexible Wandbereich beziehungsweise die Folie um den Prüfling legt.

Während der Messung, das heißt während des Überwachens des Messvolumens beim Evakuieren der Folienkammer bleibt das Belüftungsventil geschlossen. Das Belüftungsventil bleibt auch geschlossen wenn der Prüfling entnommen und ein neuer Prüfling in die Folienkammer für eine nachfolgende Messung eingelegt wird. Das Messvolumen muss dabei nicht erneut reduziert werden und die Messung erfolgt schneller als bisher. Im Falle eines kleineren Prüflings bei einer nachfolgenden Messung wird beim Evakuieren der Folienkammer der flexible Wandbereich beziehungsweise die Folie an die äußere Kontur des Prüflings gesaugt, wobei das Belüftungsventil geöffnet ist, damit das zum Ausdehnen des flexiblen Wandbereichs oder der Folie erforderliche Gas in das Messvolumen nachströmen kann.

Im Folgenden wird anhand der Figuren ein Ausführungsbeispiel der Erfindung näher erläutert. Es zeigen:
- Fig. 1: die Folienkammer im geöffneten Zustand und
- Fig. 2: die Folienkammer im geschlossenen Zustand mit eingelegtem Prüfling.

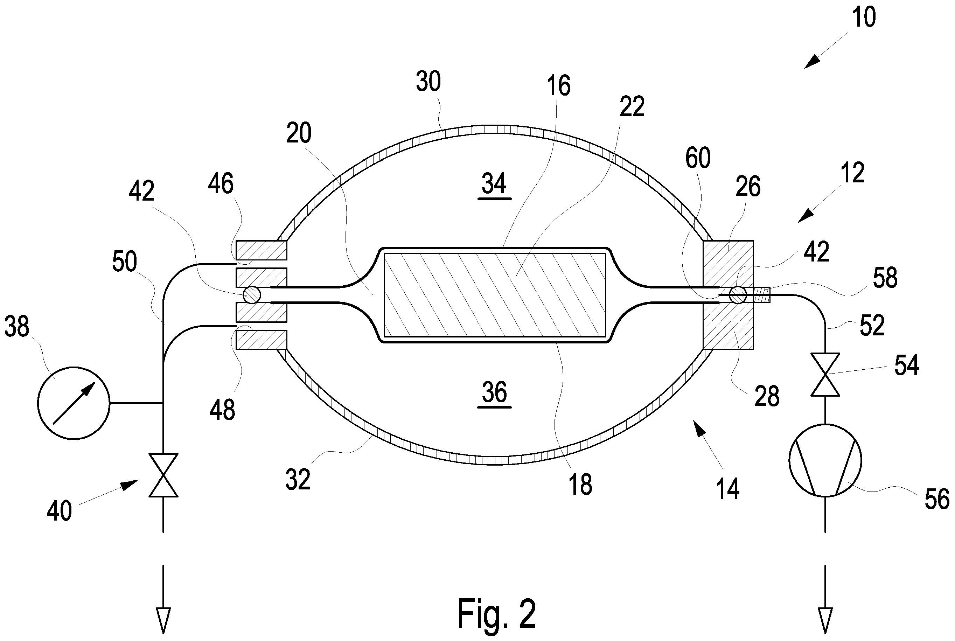

Die in den Figuren dargestellte Folienkammer 10 hat einen oberen Deckel 12 und einen unteren Deckel 14. Ein wesentliches Element des oberen Deckels 12 ist die obere Folienlage 16 und ein wesentliches Element des unteren Deckels 14 ist die untere Folienlage 18. Die beiden Folienlagen 16, 18 umschließen im geschlossenen Zustand der Folienkammer (siehe Fig. 2) den in dem Folienkammervolumen 20 enthaltenen Prüfling 22.

Jede der beiden Folienlagen 16, 18 weist an ihrer dem Folienkammervolumen 20 zugewandten Seite ein in den Figuren nicht dargestelltes Vlies als gasleitende Schicht auf. Jede Folienlage 16, 18 bildet zusammen mit dem nicht dargestellten Vlies den jeweiligen flexiblen Wandbereich der Folienkammer 10.

Die Folien 16, 18 sind im Bereich ihres äußeren Randes jeweils mit einem Messkammerring 26, 28 gasdicht verbunden. Die Folienlage 16 verschließt somit hermetisch das untere, der Folienkammer zugewandte Ende des oberen Messkammerrings 26. Die untere Folienlage 18 verschließt in entsprechender Weise das obere, dem Folienkammervolumen 20 zugewandte Ende des unteren Messkammerrings 28. Das jeweils der entsprechenden Folienlage 16, 18 gegenüberliegende Ende jedes Messkammerrings 26, 28 ist mit einem Messkammerdeckel 30, 32 hermetisch verschlossen.

Der Messkammerdeckel 30, der Messkammerring 26 und die Folienlage 16 umschließen somit ein oberes Messvolumen 34 und die Folienlage 18, der Messkammerring 28 und der Messkammerdeckel 32 umschließen ein unteres Messvolumen 36. Die Messvolumina 34, 36 sind hermetisch von dem Folienkammervolumen 20 und der die Folienkammer 10 umgebenden äußeren Atmosphäre getrennt. Durch einen in den Figuren dargestellten Gasleitungsweg 50, zum Beispiel einen Schlauch oder eine Verbindungsleitung, sind die Messvolumina 34, 36 gasleitend miteinander verbunden, um einen steten Druckausgleich zwischen den Messvolumina 34, 36 zu bewirken.

Jedes Messvolumen 34, 36 ist über einen gasleitenden Kanal 46, 48 in dem betreffenden Messkammerring 26, 28 an einen Gasleitungsweg 50 angeschlossen. Der Gasleitungsweg 50 weist eine Druckmessvorrichtung 38 auf, mit der der Druck in den beiden Messvolumina 34, 36 der Messkammern gemessen werden kann. Zudem weist der Gasleitungsweg 50 ein steuerbares Belüftungsventil 40 auf, das den Gasleitungsweg 50 und die Messvolumina 34, 36 mit der die Folienkammer 10 außen umgebenden Atmosphäre verbindet. Im geschlossenen Zustand des Belüftungsventils 40 sind die Messvolumina 34, 36 von der Atmosphäre hermetisch getrennt und im geöffneten Zustand des Belüftungsventils 40 gasleitend mit der Atmosphäre verbunden.

Zwischen den beiden Folienlagen 16, 18 ist im Bereich des äußeren Randes ein Dichtungsring 42 vorgesehen, der eine gasdichte Verbindung zwischen den Folienlagen 16, 18 in geschlossenem Zustand der Folienkammer 10 schafft.

Die Folienkammer 10 ist über eine Evakuierungsleitung 52, die ein Ventil 54 aufweist, mit einer Vakuumpumpe 56 verbunden, die das Folienkammervolumen 20 zur äußeren Atmosphäre hin evakuiert. Die Vakuumleitung 52 ist über einen Vakuumanschluss 58 an einen zwischen den beiden Messkammerringen 26, 28 gebildeten Vakuumkanal 60 angeschlossen.

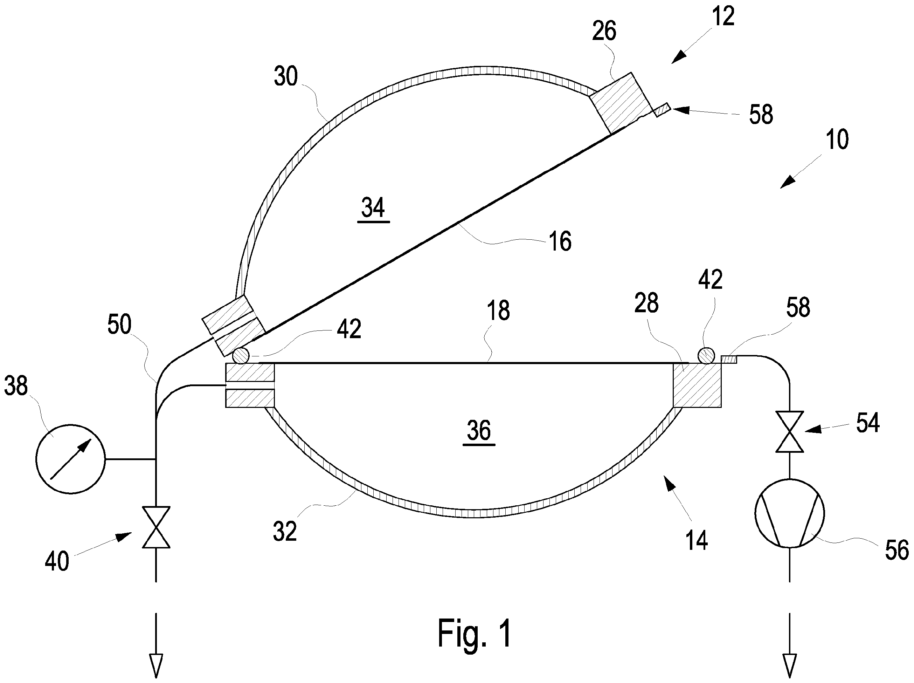

Figur 1 zeigt die Folienkammer 10 im geöffneten Zustand. Der Zugriff auf das Folienkammervolumen 20 ist frei, um den Prüfling 22 in das Folienkammervolumen 20 zu legen. Anschließend wird die Folienkammer 10 verschlossen und das Folienkammervolumen 20 mit der Vakuumpumpe 56 evakuiert, so dass sich die Folien 16, 18 eng an den Prüfling 22 anlegen.

Vor dem Belüften der Folienkammer 10 mit zuvor eingelegtem Prüfling 22 wird das Belüftungsventil 40 geschlossen, so dass die Messkammervolumina 34, 36 hermetisch von der Atmosphäre getrennt sind, wenn der mit der Messvorrichtung 38 gemessene Druck innerhalb der Messkammervolumina 34, 36 einen vorgegebenen Schwellenwert nicht überschreitet. Dieser Schwellenwert ist so gewählt, dass bei einem vergleichsweise kleinen Prüfling die Folien 16, 18 an den Prüfling gepresst werden und sich an die äußere Kontur des Prüflings anschmiegen. Bei einem vergleichsweise großen Prüfling wird der mit der Messvorrichtung 38 gemessene Druck in den Messvolumina 34, 36 größer und übersteigt den Schwellenwert, wodurch das Belüftungsventil 40 automatisch öffnet. Hierzu sind die Druckmessvorrichtung 38 und das Belüftungsventil 40 mit einer elektronischen, in den Figuren der Einfachheit halber nicht dargestellten Steuervorrichtung verbunden, die den mit der Messvorrichtung 38 gemessenen Druck erfasst und mit dem Schwellenwert vergleicht und bei Überschreiten des Schwellenwerts automatisch das Belüftungsventil 40 öffnet und bei Unterschreiten des Schwellenwerts das Belüftungsventil 40 wieder schließt.

Herkömmlicherweise wurde das Belüftungsventil 40 zur Druckmessung in den Messkammern geschlossen und bei großen Prüflingen geöffnet. In den Pausen zwischen den Messungen gleicht sich dabei die Folie 16, 18 in den drucklosen Zustand aus, wobei die Luft in die Messkammervolumina 34, 36 strömt. Wenn nun ein großer Prüfling eingelegt wird, war die Luft herkömmlicherweise durch die Schläuche des Gasleitungswegs 50 und das Belüftungsventil 40 herauszudrücken, was zu einer Zeitverzögerung führt und für den Anwender mit Aufwand verbunden ist.

Erfindungsgemäß wird das Belüftungsventil 40 geschlossen und nur dann geöffnet, wenn der Druck in den Messvolumina 34, 36 zu groß wird, das heißt einen vorgegebenen Schwellenwert übersteigt. Wird ein großer Prüfling 22 in die Folienkammer 10 eingelegt, steigt der Druck beim Schließen der Folienkammer 10 an, bis der Schwellenwert überschritten und das Belüftungsventil 40 automatisch geöffnet wird. Daraufhin kann überschüssige Luft wie bisher auch aus den Messkammern beziehungsweise den Messkammervolumina 34, 36 herausströmen bis die Folienkammer 10 vollständig geschlossen werden kann. Das Belüftungsventil 40 bleibt dann während der Messung und beim anschließenden Entnehmen des Prüflings 22 geschlossen. Beim Einlegen eines nachfolgenden Prüflings muss nun die Luft nicht wieder aus den Messkammervolumina 34, 36 gedrückt werden, da die Luft bereits herausgepresst wurde und aufgrund des verschlossenen Belüftungsventils 40 keine neue Luft in die Messkammervolumina 34, 36 eingeströmt ist. Nur beim Einlegen des ersten Prüflings mehrerer nachfolgender Messungen an verschiedenen Prüflingen muss also die Gasmenge in den Messkammervolumina 34, 36 auf herkömmliche Weise eingestellt werden.

Die Erfindung bietet den Vorteil, dass bei nachfolgenden Messungen an verschiedenen Prüflingen nicht jedes Mal beim Einlegen eines neuen, nachfolgenden Prüflings überschüssige Luft aktiv aus den Messkammervolumina herauszupressen ist. Da sich die Folien 16, 18 beim Schließen der Folienkammer 10 um den Prüfling 22 legen, erfolgt das Abpumpen des Folienkammervolumens 20 ebenfalls schneller als bei dem herkömmlichen Verfahren. Die Erfindung bietet somit den entscheidenden Vorteil, dass nachfolgende Messungen an verschiedenen Prüflingen schneller als bisher erfolgen.

## Patentansprüche

1. Verfahren zum Prüfen eines Prüflings auf das Vorhandensein eines Lecks unter Verwendung einer Folienkammer (10) zur Aufnahme des Prüflings (22), wobei die Folienkammer (10) ein Folienkammervolumen (20) umschließende Wände (16, 18) aufweist, die mindestens einen flexiblen Wandbereich aufweisen, an den ein Messvolumen (34, 36) angrenzt und auf der dem Folienkammervolumen (20) gegenüber liegenden Seite des flexiblen Wandbereichs angeordnet und hermetisch von dem Folienkammervolumen (20) getrennt ausgebildet ist, mit den Schritten:
Einlegen des Prüflings (22) in die Folienkammer (10),
Schließen der Folienkammer (10),
Evakuieren der Folienkammer (10) und
Überwachen des Messvolumens (34, 36) während des Schließens und des Evakuierens der Folienkammer (10),
**dadurch gekennzeichnet,**
**dass** ein das Messvolumen (34, 36) mit der Atmosphäre verbindendes Belüftungsventil (40) vor dem und beim Schließen der Folienkammer (10) geschlossen ist, wenn der Druck in dem Messvolumen (34, 36) unterhalb eines vorgegebenen Schwellenwertes liegt, und geöffnet wird, sobald der Druck in dem Messvolumen (34, 36) beim Schließen der Folienkammer (10) den Schwellenwert übersteigt und
**dass** das Belüftungsventil (40) vor dem Schritt des Belüftens der Folienkammer (20) geschlossen wird.

2. Verfahren nach Anspruch 1, **dadurch gekennzeichnet, dass** das Belüftungsventil (40) nach dem Überwachen des Messvolumens und während des Einlegens eines neuen Prüflings (22) für eine nachfolgende Leckprüfung geschlossen bleibt.

3. Verfahren nach einem der vorhergehenden Ansprüche, **dadurch gekennzeichnet, dass** der Prüfling nach der Leckprüfung aus der Folienkammer (10) entnommen wird und ein neuer Prüfling für eine nachfolgende Leckprüfung in die Folienkammer (10) eingelegt wird, wobei das Belüftungsventil (40) vor der Entnahme des Prüflings geschlossen wird und während des Einlegens des neuen Prüflings (22) geschlossen bleibt und geöffnet wird, sobald der Druck in dem Messvolumen (34, 36) beim Schließen der Folienkammer (10) den Schwellenwert übersteigt.

## Claims

1. Method for testing a test specimen for the presence of a leak using a foil chamber (10) to receive the test specimen (22), wherein the foil chamber (10) comprises walls (16, 18) enclosing a foil chamber volume (20), which walls comprise at least one flexible wall portion adjoining a measurement volume (34, 36) which is arranged on the side of the flexible wall portion opposite the foil chamber volume (20) and is hermetically separated from the foil chamber volume (20), the method comprising the steps of:
introducing the test specimen (22) into the foil chamber (10),
closing the foil chamber (10),
evacuating the foil chamber (10) and
monitoring the measurement volume (34, 36) during closing and evacuating of the foil chamber (10),
**characterized in that**
a vent valve (40) connecting the measurement volume (34, 36) to atmosphere is closed prior to and during the closing of the foil chamber (10) when the pressure in the measurement volume (34, 36) is below a predetermined threshold value, and is opened as soon as the pressure in the measurement volume (34, 36) exceeds the threshold value during the closing of the foil chamber (10), and
the vent valve (40) is closed prior to the step of venting the foil chamber (10).

2. Method of claim 1, **characterized in that** the vent valve (40) remains closed after the monitoring of the measurement volume and during the placing a new test specimen (22) in the foil chamber for a subsequent leak test.

3. Method of one of the preceding claims, **characterized in that** the test specimen is removed from the foil chamber (10) after the leak test and a new test specimen is placed in the foil chamber (10) for a subsequent leak test, wherein the vent valve (40) is closed prior to the removal of the test specimen and remains closed during the placing of the new test specimen (22) in the foil chamber and is opened as soon as the pressure in the measurement volume (34, 36) exceeds the threshold value upon closing the foil chamber (10).

## Revendications

1. Procédé de contrôle d'un objet à contrôler quant à la présence d'une fuite au moyen d'une chambre à parois souples (10) agencée pour recevoir ledit objet (22), la chambre à parois souples (10) comprenant des parois (16, 18) qui enferment un volume de chambre à parois souples (20) et comprennent au moins une zone flexible de paroi à laquelle un volume de mesure (34, 36) est adjacent qui est disposé sur le côté opposé au volume de chambre à parois souples (20) de la zone flexible et qui est séparé hermétiquement du volume de chambre à parois souples (20), avec les étapes
introduire l'objet à contrôler (22) dans la chambre à parois souples (10),
fermer la chambre à parois souples (10),
évacuer la chambre à parois souples (10) et
surveiller le volume de mesure (34, 36) pendant le fermeture et l'évacuation de la chambre à parois souples (10),
**caractérisé en ce**
**qu'**une valve de ventilation (40) reliant le volume de mesure (34, 36) à l'air libre est fermée avant et pendant la fermeture de la chambre à parois souples (10) lorsque la pression dans le volume de mesure (34, 36) est inférieure à une valeur seuil prédéterminée et est ouverte dès que la pression dans le volume de mesure (34, 36) dépasse la valeur seuil lors de la fermeture de la chambre à parois souples (10) et
**que** la valve de ventilation (40) est fermée avant l'étape de mise à l'air libre de la chambre à parois souples (20).

2. Procédé selon la revendication 1, **caractérisé en ce que** la valve de ventilation (40) reste fermée après la surveillance du volume de mesure et pendant l'introduction d'un nouvel objet à contrôler (22) pour un contrôle de fuite suivant.

3. Procédé selon l'une des revendications précédentes, **caractérisé en ce que** l'objet à contrôler est sorti de la chambre à parois souples (10) après le contrôle de fuite et qu'un nouvel objet à contrôler est introduit dans la chambre à parois souples (10) pour un contrôle suivant, la valve de ventilation (40) étant fermée avant la sortie de l'objet à contrôler et restant fermée pendant l'introduction du nouvel objet à contrôler (22) et est ouverte dès que la pression dans le volume de mesure (34, 36) dépasse la valeur seuil lors de la fermeture de la chambre à parois souples (10).
